Europäisches Patentamt

European Patent Office

Office européen des brevets

(19)

(11) Publication number: **0 025 319**
**A1**

# (12) EUROPEAN PATENT APPLICATION

(21) Application number: **80302999.0**

(22) Date of filing: **29.08.80**

(51) Int. Cl.³: **C 10 B 7/10**
**C 10 B 53/00, C 10 B 49/14**

(30) Priority: **30.08.79 CA 334750**

(43) Date of publication of application:
**18.03.81 Bulletin 81/11**

(84) Designated Contracting States:
**AT BE CH DE FR GB IT LI LU NL SE**

(71) Applicant: **PYRO CONVERSION INCORPORATED**
**c/o Woodburn, Wedge, Blakey Flosom & Jeppson 1 East First Street**
**Reno Nevada 89505(US)**

(72) Inventor: **Jensen, Frank C.**
**Box 6, Site 3 R.R. No.1**
**Dewinton Alberta TOL OXO(CA)**

(72) Inventor: **Hansen, Andrew H.**
**14829 Leadwell**
**Van Nuys California 91405(US)**

(72) Inventor: **Wiebe, John C.**
**5055 Nesbitt Road, N.W.**
**Calgary Alberta(CA)**

(72) Inventor: **Young, Allan**
**Star Route 1 Box 552**
**Rozamond California(US)**

(72) Inventor: **Alexander, John A.**
**P.O. Box 288**
**Cayucos California 93430(US)**

(74) Representative: **Carpmael, John William Maurice et al,**
**CARPMAELS & RANSFORD 43 Bloomsbury Square**
**London, WC1A 2RA(GB)**

(54) Method and apparatus for the removal of volatile substances from a starting material.

(57) A method and apparatus for pyrolysis employ an elongate housing of heat-resistant material (10, 11, 12) having at one end an inlet (23) and at the opposite end an outlet (31) and air locks (24) associated with the inlet and the outlet. An auger (30) or a flow of molten lead is used to feed material along the housing from the inlet to the outlet, and heaters (35) apply heat to the exterior of the housing to heat the material during its displacement along the housing. The housing has at least one outlet opening (42) for the outflow of substances gasified by the heating of the material. The invention effects efficient heating of the material and avoids the build up of high gas pressure within the apparatus.

./...

FIG. I

## BACKGROUND OF THE INVENTION

### FIELD OF THE INVENTION

The present invention relates to apparatus and methods for the pyrolysis of starting materials.

More particularly, the present invention is useful, for example, for the recovery of oils and gases from oil shales and oil sands, the recovery of oils, gases, metals and carbonaceous material from waste material, e.g. tires, p.v.c. covered wires, solid municiple waste, sludge, wood by-products, for example sawdust, chips and bark, and other waste materials containing carbonaceous material, and the recovery of metals, especially those having low melting points, from ores.

### DESCRIPTION OF THE PRIOR ART

In recent years, there has been an increasing interest in the use of pyrolysis for the removal of substances from waste materials.

Thus, for example, increasingly stringent pollution controls and the increasing costs of landfill disposal and fossil fuels have stimulated efforts to dispose of waste materials by methods which, unlike conventional incineration methods, produce useful by-products, for example rubbish derived fuel, and, in some cases, provide an energy source which can itself be used for treatment of further waste material.

To this end, various proposals have been made to treat waste material and other carbonaceous materials by pyrolysis, in which the materials are heated in an oxygen-deficient atmosphere.

Such treatment can be used to break solid waste material into gases, consisting primarily of hydrogen, methane, carbon monoxide and carbon dioxide; liquid fuel, which includes such organic chemicals as acetic acid, acetone and methanol; and a carbonaceous char.

By controlling various operating parameters of the pyrolysis process, such as reaction time, temperature and pressure, it is possible to determine what products are formed by the process.

Various means have been used for effecting the heating of the starting material.

Such means have included, for example, rotary kilns, vertical-shaft furnaces, flash pyrolysis reactors and wire conveyors located beneath heaters.

In many cases, the hot gases given off from the starting material, when it is heated, are drawn through the starting material by counterflow of the starting material and the hot gases, so that the starting material is heated by the hot gases.

These prior art apparatuses have various disadvantages.

For example, all of the hot gases are normally withdrawn through a common duct and thus such gases may accumulate within the apparatus and are not separated into fractions.

In the case of a rotary kiln, not only is the kiln a relatively large and therefore expensive unit to manufacture and to drive, but it also has the disadvantage that because it is large and also because it is rotated, it requires a relatively large area to be heated.

In the case of another prior art apparatus, in which pyrolysis is effected by conveying waste material on a wire mesh conveyor beneath suitable heaters, whereby liquids released from the starting material fall by gravity through the wire mesh conveyor for collection. However, this arrangement has the dis- advantage that the waste material must be disposed in a relatively shallow layer on the wire in order to allow sufficient and effective heating of all of the waste material, and also that the liquids must pass downwardly through the waste material layer itself, which remains substantially undisturbed, apart from its translational movement as a layer on the conveyor.

A further disadvantage of prior art pyrolysis methods and apparatuses is that with at least some of them there is a more or less severe risk of explosions caused by the build-up of excessive pressure of explosive gases given off from the starting materials.

## OBJECTS OF THE INVENTION

It is an object of the present invention to provide a novel and more efficient method and apparatus for the application of heat to a starting material for removal of substances by gasification from the starting material.

It is a further object of the present invention to at least partly mitigate at least some of the above-discussed disadvantages of the prior art.

It is a still further object of the present invention to enable gasified substances to be withdrawn from the starting material at successive positions along the paths of the material, thereby ensuring removal of such substances immediately, or at least shortly, after the formation thereof.

## BRIEF SUMMARY OF THE INVENTION

According to the present invention, the starting material is displaced along an elongate housing, to which heat is applied and the interior of which is deprived of oxygen. The gases given off by the heating of the material are removed through one or more outlet openings in the housing.

In this way, a good exposure of the material to the heat is ensured and thus rapid and effective heating of the material is promoted.

Preferably, the gases which are driven off from the material are removed immediately, or almost immediately, through a series of outlet openings spaced apart along the housing, so that these gases do not accumulate within the interior of the housing. Consequently, an accumulation of hot, combustible gases under pressure within the housing is prevented.

More particularly, according to the present invention there is provided apparatus for the gasification of substances from a starting material by the application of heat to the starting material, comprising an elongate housing of heat-resistant material; means defining an inlet in the elongate housing for the introduction of the starting material; means defining an outlet in the elongate housing and spaced along the housing from the inlet; first air lock means associated with the inlet for restricting the entry of air into the elongate housing during the introduction of the starting material into the elongate housing; means for displacing the material along the interior of the housing from the inlet to the outlet; means for applying heat to the exterior of the housing to heat the material during its displacement along the housing; means defining at least one outlet opening in the elongate housing for the outflow from the housing of substances gasified by the heating of the material; and means associated with the outlet for allowing the egress of any residue of the material from the elongate housing and preventing air flow into the elongate housing through the outlet.

Preferably, the heating means comprise a plurality of burners spaced apart along the underside of the elongate housing; the apparatus further comprising a combustion chamber surrounding the burners and the housing; gas outlet means for the outflow of combustion gases from the combustion chamber; and outlet duct means communicating with the plurality of outlet openings and extending to the exterior of the combustion chamber for the outflow of the gasified substances.

The present invention further provides a method of gasifying substances from a starting material, comprising the steps of introducing the starting material into an elongate housing through an inlet at one end of the housing; displacing the material along the housing by means of an auger, whereby the material is continuously churned by the auger; heating the exterior of the elongate housing and thereby heating the material in the elongate housing to gasify the substances; extracting the gasified substances from the elongate housing through a plurality of outlet openings which are spaced apart along the elongate housing; removing the material less the gasified substances from the elongate housing through an outlet at the opposite end of the elongate housing; and restricting the inflow of air into the elongate housing to maintain a substantially air-free environment within the elongate housing.

## BRIEF DESCRIPTION OF THE DRAWINGS

The invention will be more readily understood from the following description of a preferred embodiment thereof given, by way of example, with reference to the accompanying diagrammatic drawings, in which:-

Figure 1 diagrammatically illustrates a three-stage installation for the gasification of substances from a starting material;

Figure 2 shows a view in longitudinal vertical section through a modification of one of the stages of the apparatus of Figure 1;

Figure 3 shows a view in transverse cross-section taken along the line III-III of Figure 2;

Figure 4 shows a view corresponding to that of Figure 3 but taken in transverse cross-section through a combustion chamber containing three elongate housings arranged in parallel;

Figure 5 shows a view corresponding to that of Figure 2 but illustrating a further modification of one of the stages of the apparatus of Figure 1; Figure 5A shows a view in transverse cross-section through the apparatus of Figure 5;

Figure 6A shows a view taken in transverse section along the line VI-VI of Figure 1; and

Figure 6B shows a broken-away side view of part of an auger shown in Figure 1.

DESCRIPTION OF PREFERRED EMBODIMENT

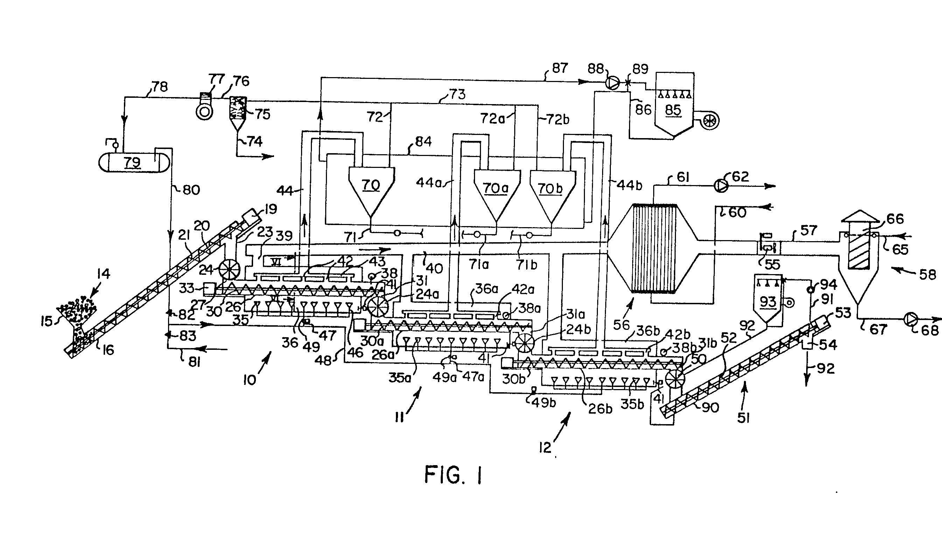

The installation illustrated in Figure 1 has three stages indicated generally by references 10, 11 and 12, respectively. However, it is at this point emphasized that, as will be explained in greater detail hereinafter, the present invention is not restricted to a three-stage apparatus or method, but may be embodied in a single stage.

For supplying waste material, indicated generally by reference numeral 14, into the apparatus, a hopper 15 is provided at the lower end of an auger conveyor 16.

A variable speed electric motor 19 has an output shaft connected to the shaft 20 of an auger 21 in the conveyor 16, so that the auger 21 can be rotated at a variable speed for dis-

- 6 -

placing the waste material along the conveyor 16.

The conveyor 16 is upwardly inclined from the hopper 15 and discharges, near its upper end, into a duct 23 for guiding the waste material from the conveyor 16 into a rotary air lock 24.

An elongate cylindrical housing 26 has an inlet opening 27 communicating with an outlet of the air lock 24 to allow the waste material 15 to be fed into the cylindrical housing 26 through the inlet 27 while restricting the entry of air into the interior of the cylindrical housing 26.

An auger 30 extends along the interior of the cylindrical housing 26 from the inlet 27 to an outlet 31 of the cylindrical housing 26 for displacing the material 14 from the inlet 27 towards the outlet 31.

The auger 30 is rotationally driven by a variable speed electric motor 33, so that the rate of travel of the material 14 along the cylindrical housing 26 can be controlled by regulation of the speed of the electric motor 23.

A plurality of heaters in the form of burners 35 are spaced apart along the cylindrical housing 26, the burners 35 being positioned beneath the underside of the cylindrical housing 26.

The burners 35 are contained within a combustion chamber 36 within a jacket 37 of heat-insulating ceramic material.

The jacket 37 has an outlet in the form of a flue 39 communicating with an exhaust duct 40 to allow combustion gases from the burners 35 to escape from the combustion chamber 36 and a damped air inlet valve 41.

The cylindrical housing 26 is provided with five outlet openings or ducts 42, which are spaced apart from one another along the length of the cylindrical housing 26, and which communicate through a manifold 43 with an outlet duct 44.

The burners 35 are connected through respective fuel supply pipes 46, and fuel supply pipes 47 and 48 which are common to the fuel supply pipes 46, and a fuel supply control valve 49 is provided in the fuel supply pipe 47 for regulating the supply of fuel to the burners 35, as described in greater detail hereinafter.

As will be readily apparent from Figure 1, the first stage 10 of the installation is similar to the second and third stages 11 and 12, and accordingly it is not necessary to describe the latter in detail. Therefore, parts in the second and third stages 11 and 12 which correspond to the above-described parts of the first stage 10 have been indicated by the same reference numerals with the suffixes "a" and "b", respectively.

As will also be apparent from Figure 1, the air locks 24a and 24b of the second and third stages 11 and 12 are connected to the outlets 31a and 31b, respectively, of the housings 26a and 26b, so that the material discharged through the outlet of the housing 26 is fed into the inlet of the housing 26a and the material discharged through the outlet of the housing 26a is fed into the inlet of the housing 26b.

The outlet 31b of the third stage 12 is connected through an air lock 50 to the lower end of an upwardly inclined auger conveyor indicated generally by reference numeral 51.

The auger conveyor 51 has an auger 52 driven by a variable speed electric motor 53, and, adjacent its upper end, an outlet or discharge opening 54.

Exhaust gases are drawn from the exhaust duct 40 by a fan 55 through a heat exchanger, indicated generally by reference numeral 56, and an outlet duct 57 with a scrubber, indicated generally by reference numeral 58.

Water or any other suitable heat exchange medium is fed to and from the heat exchanger 56 through an inlet pipe 60 and an outlet pipe 61, by means of a pump 62, whereby heat is recovered from the exhaust gases passing through the heat exchanger 56 and can be used for any suitable heating purpose.

At the scrubber 58, particulate material is removed from the combustion gases by water fed into the scrubber 58 through a water inlet pipe 65, and the scrubbed gases are allowed to escape through a flue 66, while the water is collected in the scrubber 58 and removed as effluent therefrom through an outlet pipe 67 provided with a pump 68.

The outlet ducts 44, 44a and 44b, communicating with the outlet openings of the three cylindrical housings 26, 26a and 26b, communicate with respective condensers indicated generally by reference numerals 70, 70a and 70b.

Outlet pipes 71, 71a and 71b are provided for the removal of condensates from the condensers 70, 70a and 70b, these condensates or liquid fractions being delivered to suitable storage means (not shown).

Gaseous fractions remaining after the condensations within the condensers 70, 70a and 70b are fed through respective outlet pipes 72, 72a and 72b and a common outlet pipe 73 to a filtration and purification unit 75. Effluent from the filtration and purification unit 75 is fed through an outlet pipe 74.

The filtered and purified gases are fed from the filtration and purification unit 75 through a pipe 74 to a compressor 77, and thence through a further pipe 78 to a storage tank 79.

From the tank 79, the gases are fed through a pipe 80 to the pipe 48, and thence to the burners 35, 35a and 35b for use in heating the three cylindrical housings 26, 26a and 26b.

A fuel supply pipe 81 is also connected to the pipe 48 for supplying additional fuel to the burners during starting up of the installation and when the supply of gases through the pipe 80 from the storage tank 79 is insufficient, valves 82 and 83 being provided in the pipes 80 and 81, respectively, for controlling the flow therethrough.

A cooling water tank 84 containing the condensers 70, 70a and 70b is connected to a cooling tower 85 by pipes 86 and 87 for circulating cooling liquid through the three condensers, the pipe 87 being provided with a pump 88 and being connectible to the pipe 86 through a normally closed by-pass valve 89 for bypassing the condensers.

The auger conveyor 51 has a water-cooled jacket 90 connected by pipes 91 and 92 to a cooling tower 93, the pipe 91 being provided with a pump 94 for circulating cooling water through the jacket 90 and the cooling tower 93.

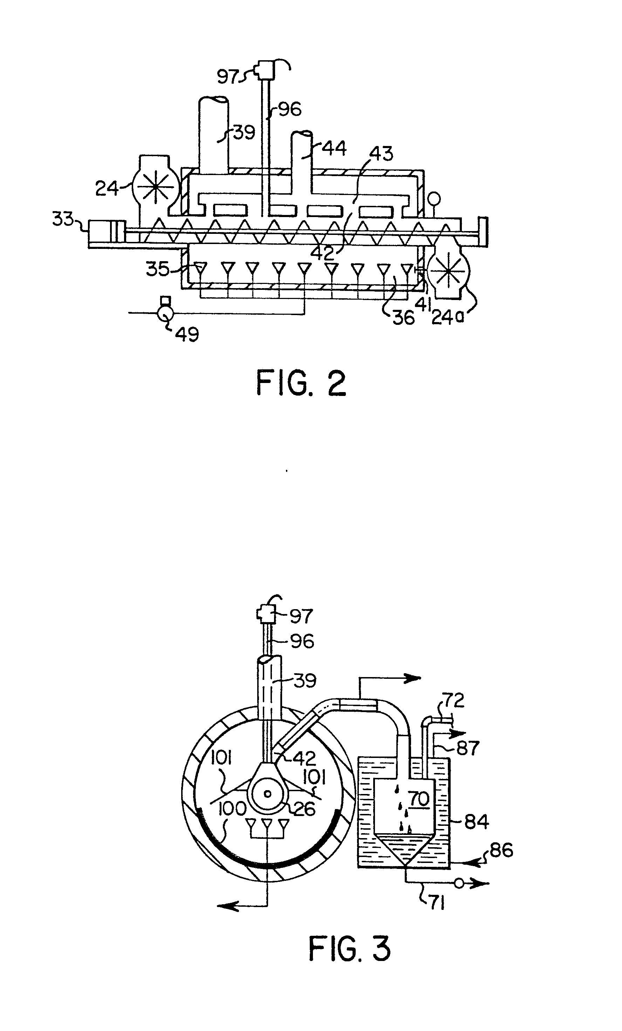

Figure 2 illustrates a modification of the first stage of the apparatus of Figure 1, this modification comprising a pressure relief duct 96 provided with a pressure relief valve 97 for relieving any excess pressure from the elongate housing in an emergency and for thereby preventing the build-up of dangerously high pressure in the elongate housing.

As shown in Figure 3, the combustion chamber 36 is provided on the interior surface thereof with a heat reflective shield 100 of stainless steel, which is provided at the bottom of the combustion chamber so as to underlie the burners 35 and the underside of the elongate cylindrical housing 26.

Furthermore, a pair of stainless steel baffle plates 101 project laterally outwardly from the cylindrical housing 26, at a downward inclination and at opposite sides thereof. Since the heat shield 100 and the baffle plates 101 are each made of a heat reflective material, they ensure even, efficient concentation of the heat from the burners onto the underside of the elongate cylindrical housing 26 and thus further improve the heating of the material within the elongate cylindrical housing 26.

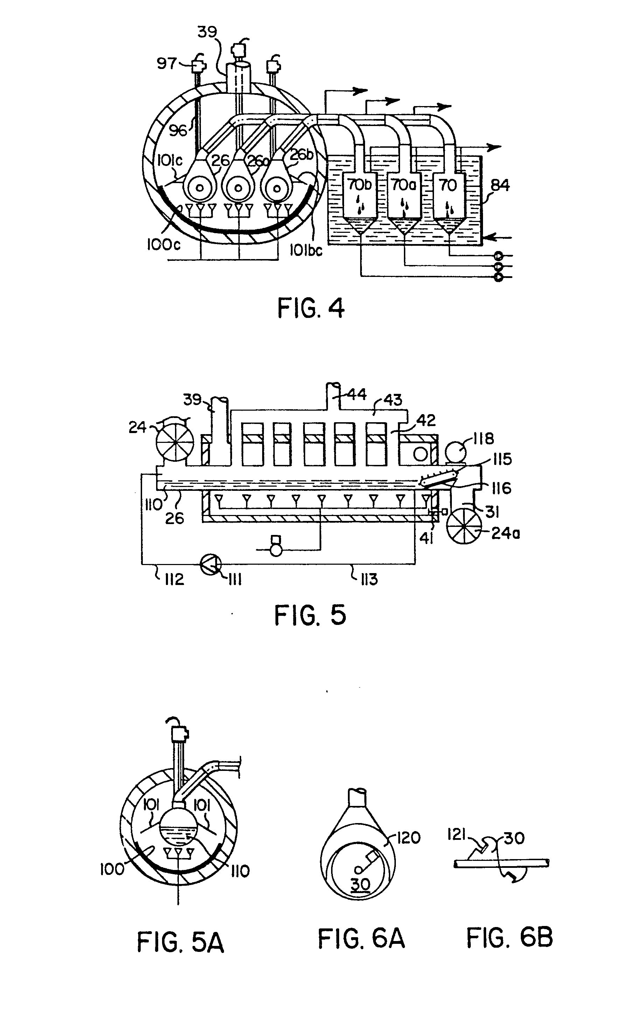

Figure 4 shows a view corresponding to Figure 3 but of a modified arrangement in which the elongate cylindrical housings 26, 26a and 26b are arranged side-by-side, for operation in parallel instead of in series, the three cylindrical housings 26, 26a and 26b being accommodated within a single, common combustion chamber 36c formed by a jacket 37c of heat-insulating ceramic material.

The bottom of the combustion chamber is again provided with a heat reflective shield, which in this modification is indicated by reference numeral 100c, and the outermost cylindrical housings 26 and 26b are provided with baffles 101c and 101bc, these baffles and the shield 100c being formed of heat reflective material for concentrating the heat from the burners on the undersides of the three cylindrical housings.

The modified apparatus of Figures 5 and 5a, in which parts which correspond to the parts which have already been described hereinabove with reference to Figure 1 are indicated by the same reference numerals, differs from the apparatus of Figure 1 in that the auger 30 provided in the latter is entirely omitted.

Instead, in this embodiment of the invention, a pool 110 of molten lead is provided within the elongate cylindrical housing 26, and a pump 111 is connected by a pipe 112 to the

- 11 -

inlet end of the housing 26 and by a pipe 113 to a position adjacent the outlet end of the housing 26 for circulating the molten lead through the elongate housing 26 in the direction extending from the inlet towards the outlet end thereof.

A padddle-type conveyor 115 extends from below to above the surface of the molten lead pool 110 adjacent the outlet end of the cylindrical housing 26 for lifting any residue of the starting material from the molten lead and discharging such residue through the outlet of the housing into the air lock 24.

For preventing the molten lead from flowing into the cylindrical housing outlet, an inclined baffle 116 is provided beneath the conveyor 115 and extends to opposite sides of the interior of the cylindrical housing 26.

A variable speed drive motor 118 is provided for driving the conveyor 114.

The operation of the above-described apparatus is as follows.

The starting material 14, which may, if required, be broken down to a suitable size by use of a hammermill chopper, shredder or the like, is fed through the hopper 15 and the upwardly inclined auger 16 to the air lock 24 and thence into the first cylindrical housing 26.

The speeds of the electric motors 19 and 33 are controlled so as to regulate the rate of supply of the material 14 into and along the cylindrical housing 26 in accordance with the type of material being treated, the temperature prevailing within the housing 56 and other parameters affecting the formation of gases within the cylindrical housing 26.

Heat is applied to the material, through the wall of the cylindrical housing 26 from the burners 36, which are supplied with fuel as described above, and after the starting of the apparatus, the auger 30 also becomes heated and applies heat to the material being treated. Preferably, the heating of the housings 26, 26a and 26b is initiated prior to the input of the material, so that oxygen-containing air is driven out from the housings before the treatment of the material starts.

As the material is displaced along the cylindrical housing 26 by the auger 30, it is constantly churned in a manner which ensures efficient and thorough application of heat to the material.

It has been found, in practice, that improved results are obtained if the cylindrical housing 26 is slightly upwardly inclined from the inlet end to the outlet end thereof. For example, the housing 26 may typically have a length of approximately 20 feet, and may be upwardly inclined through a distance of 1 inch from its inlet end to its outlet end.

As gases are given off from the material 14 within the housing 26, and due to the provision of the plurality of outlet openings 42 spaced apart along the length of the cylindrical housing 26, these gases are promptly removed from the interior of the cylindrical housing 26 and passed through the manifold 43 to the outlet duct 44.

As is particularly apparent from Figure 6A, the diameter of the auger 30 is less than the internal diameter of the cylindrical housing 26, and the auger 30 is provided at the bottom of the housing 26, so that a crescent-shaped gap exists between the top of the auger and the housing. This gap is substantially closed, at a point just beyond each of the outlet openings 42, by crescent-shaped baffles 120, which ensure that at least the majority of the gases given off from the starting material are promptly discharged through the outlet openings 42 without travelling further along the interior of the housing 26.

However, in some cases, each housing may be provided with only a single outlet opening 42, depending upon the type of material to be treated.

Figures 6A and 6B also illustrate portions of the periphery of the auger 30 which are bent to form paddles 121 extending at an angle to the screw surface of the auger for improving the churning of the material under treatment.

As an alternative to this formation of the panels, flanges or angle-iron may be secured as by welding or bolts to the auger.

The temperature within the cylindrical housing 26 is sensed, adjacent the outlet end of the cylindrical housing 26, by a temperature sensor 38, which controls the valve 49 and thereby regulates the heating of the cylindrical housing 26 by the burners 35 in accordance with the temperature at the outlet end of the cylindrical housing 26.

The material 14, less any gasified substances discharged through the outlet duct 44, is passed from the cylindrical housing 26 through the air lock 24a to the cylindrical housing 26, in which this material is heated to a higher temperature to remove further substances therefrom in a similar manner.

Likewise, the material discharged from the outlet end of the cylindrical housing 26a is fed into the cylindrical housing 26b, and is then treated at even higher temperatures.

By the time it reaches the outlet end of the cylindrical housing 26b, the starting material has been reduced to a carbonaceous material, known as char, which, depending on the content of the starting material, may also contain metals and other inorganic substances.

In the first stage 10, the material 14 may, for example, by progressively heated up to 350°, and the remaining material treated in the second stage 11 may be progressively heated from 300 to 600°F, the remaining material transferred to the third stage 12 being heated therein from 500° to 950°F.

From the air lock 50 of the third stage 12, the char is conveyed by the auger conveyor 51 and discharged through the discharge opening 54 as indicated by arrow 92 to a suitable quenching means or the like.

It has been found, in practice, that using sawdust as the starting material 14, the char discharged through the discharge opening 54 is reduced to commercially sellable carbon black.

The operation of the embodiment of the invention illustrated in Figure 5 is similar to that described above with reference to Figure 1, except that in the case of Figure 5 the starting material is driven along the interior of the cylindrical housing 26 by the flow of the molten lead.

The molten lead comes into close heat-transmitting physical relationship with the material being treated and thus ensures an extremely good transference of heat to the latter. Thus, the molten lead serves both to convey the material and also as a high temperature heat exchange medium.

As the material being treated is carried along the housing 26 by the molten lead, gaseous fractions driven off by heat from the material are passed through the outlets 42 and collected as described hereinabove.

Any residue of unconverted material which reaches the outlet end of the housing is raised over the inclined baffle 116 by the conveyor 118 and discharged through the housing outlet.

The use of molten lead, as described above with reference to Figure 5, is particularly advantageous in the handling of certain raw feed stock and, in particular, when high temperatures of up to 2200°F are required.

As will be apparent from a comparison of Figures 1 and 4, the three housings 26, 26a and 26b may be operated either in series or in parallel to one another. However, it is to be understood that the invention is not restricted to the use of three such housings but that, depending upon the type and quantity of material treated, fewer or more such housings may be employed and that, furthermore, a plurality of such housings may be arranged with some of them in series and others of them in parallel.

As will readily be apparent to those skilled in the art, a particular advantage of this ability to employ a plurality of housings either in series or in parallel is that the above-described apparatuses may be employed as plants which are relatively portable so that a plant for treating a relatively large throughput of material and/or for subjecting the material to a relatively gradual but large increase in temperature, may be readily constructed, even in remote locations, by employing a plurality of the cylindrical housings in an appropriate arrangement. Consequently, the plant is relatively portable and can therefore be set up even in locations where the transportation of large machinery components is impossible.

Furthermore, since in each case the cylindrical housings are stationary and not rotationally driven, and since only the auger or augers or the pump 111 and the conveyors are required to be driven, the power requirement of the apparatus is very low, which further enhances the efficiency, economy, compactness and transportability of the apparatus.

The embodiments of the invention in which an exclusive
property or privilege is claimed are defined as follows:

CLAIMS:

1. Apparatus for the gasification of substances from a
starting material by the application of heat to the starting
material, comprising:

an elongate housing of heat-resistant material;

means defining an inlet in said elongate housing for
the introduction of the starting material;

means defining an outlet in said elongate housing and
spaced along said housing from said inlet;

first air lock means associated with said inlet for
restricting the entry of air into said elongate housing during
the introduction of the starting material into said elongate
housing;

means for displacing the material along the interior
of said housing from said inlet to said outlet;

means for applying heat to the exterior of said housing
to heat the material during its displacement along said housing;

means defining at least one outlet opening in said
elongate housing for the outflow from said housing of substances
gasified by the heating of the material; and

means associated with said outlet for allowing the
egress of any residue of the material from said elongate housing
and preventing air flow into said elongate housing through said
outlet.

2. Apparatus as claimed in claim 1, wherein said
heating means comprise a plurality of burners spaced apart

-18-

along the underside of said elongate housing; said apparatus further comprising a combustion chamber surrounding said burners and said housing; gas outlet means for the outflow of combustion gases from said combustion chamber; and outlet duct means communicating with said outlet opening and extending to the exterior of said combustion chamber for the outflow of the gasified substances.

3.    Apparatus as claimed in claim 1 or 2, wherein said means for displacing the material comprise an auger extending along the interior of said housing and means for rotationally driving said auger, said housing being stationary and at least approximately horizontal.

4.    Apparatus as claimed in claim 1 or 2, wherein said outlet opening is one of a plurality of outlet openings spaced apart along said elongate housing.

5.    Apparatus as claimed in claim 1, wherein said outlet opening is one of a plurality of outlet openings spaced apart along the top of said elongate housing, and said material displacing means comprise an auger downwardly spaced from the top of said housing to provide a gap between the top of said auger and said housing.

6.    Apparatus as claimed in claim 5, further comprising a plurality of baffle means extending across said gap between said outlet openings for directing the gasified substances to said outlet openings.

0025319

7. Apparatus as claimed in claim 4 or 5, further comprising paddle means projecting from said auger for promoting churning of said material.

8. Apparatus as claimed in claim 1 or 2, wherein said means for displacing the material comprise means for circulating a liquid through said elongate housing.

9. Apparatus as claimed in claim 1, wherein said means for displacing the material comprise a body of lead partially filling said elongate housing, and means for circulating the lead through the housing after the lead has been melted by said heat applying means, and wherein means are provided adjacent said elongate housing outlet for lifting the residue of the material above the level of the lead in said elongate housing and discharging it into said elongate housing outlet.

10. Apparatus as claimed in claim 9, wherein said heating means comprise a plurality of burners spaced apart along the underside of said elongate housing; said apparatus further comprising a combustion chamber surrounding said burners and said housing; gas outlet means for the outflow of combustion gases from said combustion chamber; and outlet duct means communicating with said outlet opening and extending to the exterior of said combustion chamber for the outflow of the gasified substances.

11. Apparatus as claimed in claim 2 or 10, further comprising reflector means within said combustion chamber for reflecting heat onto said elongate housing.

-20-

12. Apparatus as claimed in claim 2 or 10, further comprising reflective heat shield means extending outwardly from opposite sides of said elongate housing within said combustion chamber for confining and reflecting heat from said heating means to said elongate housing.

13. Apparatus as claimed in claim 2 or 10, further comprising heat reflective means on the interior of said combustion chamber for reflecting heat from said heating means to said elongate housing.

14. Apparatus as claimed in claim 2 or 10, wherein said combustion chamber comprises a jacket of heat insulating material.

15. Apparatus as claimed in claim 1 or 2, further comprising means for sensing the temperature within said housing; means responsive to said temperature sensing means for regulating said heat applying means; and means for adjusting said regulating means to enable a variable temperature to be maintained within said housing.

16. Apparatus as claimed in claim 1 or 2, further comprising condenser means connected to said plurality of outlet openings for partially liquifying the gasified substances, and means for feeding combustible gases remaining in said condenser means after such liquification to said heat applying means for use in heating said housing.

17. Apparatus as claimed in claim 5, wherein said auger means comprise a pair of augers arranged side-by-side within said housing.

18. Apparatus as claimed in claim 5, wherein variable speed drive means are provided for driving said auger, whereby the rate of displacement of the material along said housing can be varied.

19. Apparatus as claimed in claim 1 or 2, further comprising a hopper for receiving the starting material, conveyor means for feeding the starting material from said hopper to said first air lock means, and means for driving said conveyor means at a variable speed.

20. Apparatus for the gasification of substances from a starting material by the application of heat to the starting material, comprising:

first, second and third stages for successively treating the material;

said first, second and third stages each comprising:

an elongate housing of heat-resistant material;

means defining an inlet at one end of said elongate housing;

means defining an outlet at the opposite end of said elongate housing;

first air lock means associated with said inlet for allowing the introduction of the starting material into said elongate housing and restricting the entry of air into said elongate housing;

-22-

means for displacing the material along the interior of said housing from said inlet to said outlet;

means for applying heat to the exterior of said housing to heat the material during its displacement along said housing;

means defining at least one outlet opening in said elongate housing for the outflow from said housing of the substances gasified by the heating of the material; and

second air lock means associated with said outlet for allowing the egress of any residue of the material from said elongate housing and restricting air flow through said outlet;

said apparatus further comprising means for connecting said elongate housings of said first, second and third stages in series.

21.  Apparatus as claimed in claim 20, wherein, in each of said first, second and third stages, said heating means comprise a plurality of burners spaced apart along the underside of said elongate housing; said apparatus further comprising a combustion chamber surrounding said burners and said housing; gas outlet means for the outflow of combustion gases from said combustion chamber; and outlet duct means communicating with said plurality of outlet openings and extending to the exterior of said combustion chamber for the outflow of the gasified substances.

22.  Apparatus for the gasification of substances from a starting material by the application of heat to the starting material, comprising:

a plurality of elongate housings;

said elongate housings each being provided with:

- 23-

means defining an inlet at one end thereof;

means defining an outlet at the opposite end thereof;

first air lock means associated with said inlet for allowing the introduction of the starting material into the respective said elongate housing and restricting the entry of air into the respective said elongate housing;

means for displacing the material along the interior of the respective said housing from said inlet to said outlet;

means for applying heat to the exterior of the respective said housing to heat the material during its displacement along the respective said housing;

means defining at least one outlet opening in the respective said housing for the outflow therefrom of the substances gasified by the heating of the material; and

second air lock means associated with said outlet for allowing the egress of any residue of the material from the respective said elongate housing and restricting air flow through said outlet;

a combustion chamber surrounding said plurality of elongate housings and said heat applying means thereof with said elongate housings arranged in parallel within said combustion chamber; and

. gas outlet duct means communicating with said outlet openings and extending to the exterior of said combustion chamber.


23.    Apparatus as claimed in claim 22, wherein said heating means comprise a plurality of burners spaced apart along the underside of the respective said elongate housing; and heat reflector means are provided within said combustion chamber for

-24-

concentrating the heat from said burners on the undersides of said elongate housings.

24. A method of gasifying substances from a starting material, comprisng the steps of:

introducing the starting material into an elongate housing through an inlet at one end of said housing;

displacing the material along said housing;

heating the exterior of said elongate housing and thereby heating the material in said elongate housing to gasify the substances;

extracting the gasified substances from said elongate housing through a plurality of outlet openings which are spaced apart along said elongate housing;

removing the material less the gasified substances from said elongate housing through an outlet at the opposite end of said elongate housing; and

restricting the inflow of air into said elongate housing to maintain a substantially oxygen-deficient environment within said elongate housing.

25. A method as claimed in claim 24, wherein the heating of said elongate housing is effected by heating the underside of said housing and the rate of introduction of the material into said elongate housing is regulated so that an uppermost portion of said auger projects upwardly beyond the level of the material in said housing.

26. A method as claimed in claim 24 or 25, wherein the step of heating the exterior of said elongate housing comprises employing a plurality of burners spaced apart along the housing and confining the combustion gases of said burners by a combustion chamber extending around said housing and provided with a combustion gas outlet.

27. A method as claimed in claim 24 or 25, which includes sensing the temperature within said elongate housing and automatically controlling the application of heat to said elongate housing in accordance with the sensed temperature.

0025319

FIG. I

FIG. 2

FIG. 3

FIG. 4

FIG. 5

FIG. 5A

FIG. 6A

FIG. 6B

## EUROPEAN SEARCH REPORT

European Patent Office

Application number

EP 80 30 2999

| | DOCUMENTS CONSIDERED TO BE RELEVANT | | CLASSIFICATION OF THE APPLICATION (Int. Cl ³) |
|---|---|---|---|
| Category | Citation of document with indication, where appropriate, of relevant passages | Relevant to claim | |
| X | FR - A - 2 310 531 (LAMPL) <br> * Claims 1-5; figure 7 * <br> & GB - A - 1 531 106 <br><br> -- | 1,3,16, 19,24 | C 10 B 7/10 <br> 53/00 <br> 49/14 |
| X | US - A - 3 945 890 (KEMP) <br> * Claims 1-3; figures 1-3 * <br><br> -- | 1,2,4, 14,16 | |
| X | US - A - 4 123 332 (ROTTER) <br> * Claims 1-26; figures 1,2 * <br><br> -- | 1-3,11, 16,18, 19,24- 27 | |
| X | GB - A - 1 036 315 (HOLFORD) <br> * Claims 1-12; figure 1 * <br><br> -- | 1,3-7, 14,16 | TECHNICAL FIELDS SEARCHED (Int Cl.³) <br><br> C 10 B 7/10 <br> 53/00 <br> 49/14 |
| | US - A - 3 201 329 (BURT) <br> * Claims 2-8; figures 1-5 * <br><br> -- | 15,17- 19 | |
| | US - A - 1 590 901 (MORGAN) <br> * Claim 1; figures * <br><br> -- | 8,9 | |
| | DE - A - 2 556 732 (WISSING) <br> * Claim 1; figures * <br><br> -- | 8,9,14, 20,22, 24 | CATEGORY OF CITED DOCUMENTS <br> X: particularly relevant <br> A: technological background <br> O: non-written disclosure <br> P: intermediate document <br> T: theory or principle underlying the invention |
| | US - A - 2 973 306 (CHICK) <br> * Claims 1,2; figure 1 * <br><br> -- <br> ./. | 1-5,14, 16,18, 24-27 | E: conflicting application <br> D: document cited in the application <br> L: citation for other reasons |

The present search report has been drawn up for all claims

&: member of the same patent family, corresponding document

| Place of search | Date of completion of the search | Examiner |
|---|---|---|
| The Hague | 02-12-1980 | MEERTENS |

EPO Form 1503.1   06.78

0025319

Application number

EP 80 30 2999

**EUROPEAN SEARCH REPORT**

European Patent Office

—2—

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>GB - A - 163 343</u> (McLEOD)<br>* Claims 1-4; figures 1-5 *<br><br>-- | 20,22 | |
| X | <u>US - A - 1 538 796</u> (GORDON)<br>* Claims 1-5; figures 1,2 *<br><br>-- | 1,3-5, 19,20, 22 | |
| X | <u>US - A - 4 052 265</u> (KEMP)<br>* Claims 1-3; figures 1-3 *<br><br>-- | 24,26 | |
| | | | **TECHNICAL FIELDS SEARCHED (Int. Cl. 3)** |
| X | <u>US - A - 1 810 828</u> (HAYES)<br>* Claims 1-3; figure 1 *<br><br>---- | 24 | |